Europäisches Patentamt

European Patent Office (11) Publication number: **0 017 369**

Office européen des brevets A1

(12) **EUROPEAN PATENT APPLICATION**

(21) Application number: 80300799.6

(22) Date of filing: 14.03.80

(51) Int. Cl.³: **F 16 H 3/42**
F 16 H 3/36

(30) Priority: 15.03.79 GB 7909138

(43) Date of publication of application:
15.10.80 Bulletin 80/21

(84) Designated Contracting States:
AT BE CH DE FR GB IT LU NL SE

(71) Applicant: **ABONHILL LIMITED**
**Suite 66, Kent House 87 Regent Street**
**London W1 7HF(GB)**

(72) Inventor: **Spitzer, Egon**
**2/1 Northwood Hall Hornsey Lane**
**London N6 5PQ(GB)**

(74) Representative: **Warren, Keith Stanley et al,**
**BARON & WARREN 16 Kensington Square**
**London W8 5HL(GB)**

(54) Improvements in change-speed gear mechanisms.

(57) A change speed gear mechanism comprises a hollow, frusto-conical, rotary shell (6) having rings (12-16) of gear teeth disposed about its internal periphery, an input shaft (2) rotatable relatively to the shell, an output gear (18) fixed to the shell, and a change gear unit (19) mounted internally of the shell for cooperation with the gear rings on the shell. The change gear unit (19) is coupled to the input shaft (2) and is mounted for rotation about an axis parallel to the generatrix of the shell. It comprises a series of gear cages (24-28) associated respectively with the gear rings (12-16) on the shell, each cage including a ring of gear teeth expandable into mesh with the associated gear ring on the shell so as to transmit rotation from a selected gear cage to the shell. The gear cages of the change gear unit are selectively operable to provide different transmission ratios between the input shaft and the output gear.

./...

Fig.1

-1-

## IMPROVEMENTS IN CHANGE-SPEED GEAR MECHANISMS

The present invention relates to change-speed gear mechanisms and, more particularly, although not exclusively, to change-speed gear mechanisms for use in the transmissions of motor vehicles.

The present invention consists in a change-speed gear mechanism characterized by a frusto-conical or disc-like rotary member having gear teeth disposed substantially parallel to the generatrix of the member, an input or output shaft rotatable relatively to the rotary member, an output or input gear fixed to the rotary member coaxially therewith so as to be rotatable with the member, a gear change unit mounted for rotation about an axis substantially parallel to the generatrix of the rotary member and comprising a series of gear cages arranged coaxially with respect to the axis of the change gear unit, said gear cages respectively including rings of gear teeth which rings are selectively expandable radially of the cages into mesh with the gear teeth on the rotary member so as to transmit rotation between the rotary member and a selected gear cage, and said rotary member and gear cages being adapted to provide different gear ratio connections when the gear cages are respectively in mesh with the rotary member, and gear means coupling the change gear unit to the input or output shaft.

In a preferred embodiment, the rotary member is a hollow, frusto-conical rotary member having the gear teeth disposed about its internal conical surface substantially parallel to the generatrix thereof, and the gear change unit is mounted internally of the rotary member. The different gear ratios may be obtained by internally forming the rotary member with a series of frusto-conical sections respectively having increasing numbers of gear teeth from the innermost section, which is adjacent the smaller diameter end of the rotary member, to

-2-

the outermost section adjacent its larger diameter end. These sections cooperate respectively with the gear cages of the change gear unit, each of which cages has the same number of gear teeth. Alternatively, the internal conical surface of the rotary member may be formed with a single set of gear teeth which extend axially along the internal surface and taper along their lengths so that they are wider adjacent the larger diameter end of the rotary member, and the gear cages cooperating with these tapered gear teeth are respectively provided with different numbers of gear teeth.

The ring of gear teeth mounted in each cage may be expandable by a shuttle member which is slidable axially within the change gear unit and is controllable so as selectively to expand the teeth of the cages. Preferably, this shuttle is of such a length that it initially expands the teeth of one cage into mesh with the teeth of the rotary member before permitting the teeth of the adjacent, previously-engaged cage to disengage from the rotary member. The shuttle member may be controllable by a manually operable gear selector or an automatic gear selecting mechanism. The change-speed gear mechanism according to the invention is particularly suitable for control by an automatic gear selecting mechanism because its design inherently requires successive engagement of consecutive gear ratios from low to high gear, as the speed of the output drive increases, and _vice versa_, as the speed of the output is reduced.

Preferably, the input or output shaft is coupled to the inner end of the change gear unit and the output gear is disposed at or adjacent the outer periphery or larger diameter end of the rotary member, as the case may be. In a motor vehicle, the input shaft may be coupled to the engine via a conventional centrifugal or electromagnetic clutch mechanism and the output gear may be coupled to the _____

-3-

propeller shaft of the vehicle via a conventional gear train including a reversing mechanism. Alternatively, the input shaft may be directly geared to a reversing drive which can be selectively engaged with the propeller shaft on disengagement of forward drive.

In order that the present invention may be readily understood, reference will now be made to the accompanying drawings in which:-

Fig. 1 diagrammatically illustrates a motor vehicle gearbox embodying a change-speed gear mechanism constructed in accordance with the invention,

Fig. 2 is a fragmentary elevational view of the change gear unit,

Fig. 3 is a section on the line III-III of Fig. 2,

Fig. 4 is a side view of one of the expandable teeth used in the gear cages, and

Fig. 5 is a side view of the shuttle.

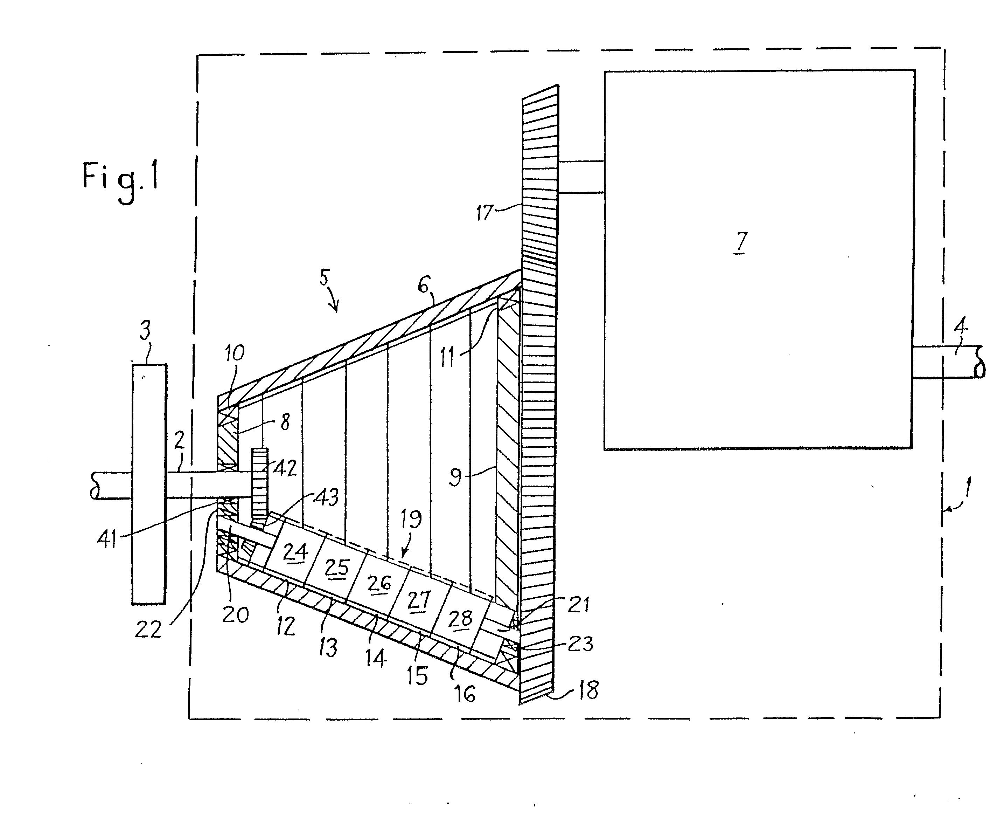

Referring to Fig. 1 of the drawings, the gearbox 1 has an input shaft 2 connected via a clutch mechanism 3 to the engine (not shown) of a motor vehicle, and an output shaft 4 connected to the propeller shaft (not shown) of the vehicle. It comprises a change-speed gear mechanism 5 coupled to the input shaft 2 and a suitable gear train 7, including a reversing mechanism, coupling the change-speed gear mechanism to the output shaft 4 of the gearbox.

The change-speed gear mechanism 5 comprises a hollow, frusto-conical, rotary member or shell 6 supported at opposite ends on fixed end plates 8,9. The shell 6 is mounted on the end plates by means of rolling bearings 10,11. Its internal surface comprises a series of five frusto-conical sections 12-16, each formed about its internal conical surface with gear teeth which extend axially of the conical surface. The numbers of gear teeth in the sections 12-16 increase successively from the smaller diameter end to the larger diameter end of the shell 6. The shell is connected at its larger diameter end to the input bevel gear 17 of the gear train 7 by a bevel gear ring 18 fastened to the larger diameter end of the shell.

Mounted internally of the rotary member so as to cooperate with the gear sections 12-16 is a change gear unit 19. This unit is mounted for rotation about an axis parallel to the generatrix of the frusto-conical shell by shafts 20,21 projecting from opposite ends of the unit and mounted in the fixed end plates 8,9 by means of rolling bearings 22,23. The gear unit comprises a series of five cylindrical gear cages 24-28 arranged coaxially with respect to the axis of the unit. Each gear cage comprises a ring of radially expandable teeth 29 which, when expanded, mesh with the teeth of the cooperating gear section 12-16 of the rotary shell.

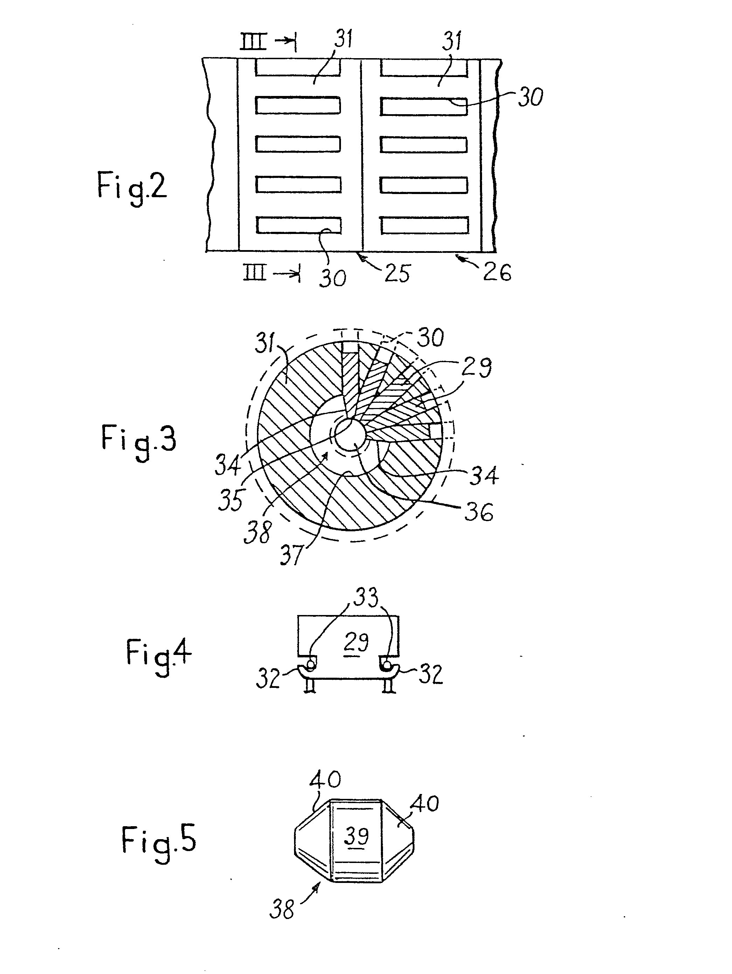

Referring to Figs. 2, 3 and 4, the expandable teeth 29 are slidably mounted in radial slots 30 in a cage body 31. At their inner ends they are formed with hook portions 32 which are engaged by annular springs 33 which urge the teeth radially inwardly of their slots so that the teeth are biassed into a retracted position. The inner parts of the teeth are tapered at 34 so that, in their innermost positions, the flanks of the tapered parts of the teeth engage to define a rest position and prevent further inward movement of the teeth. In this rest position, the inner edges 35 of the teeth define a central opening 36 substantially coaxial with an axial passageway 37 formed by the inner peripheries of the cages and extending through the change gear unit.

Slidably mounted in the passageway 37 in the gear unit 19 is a shuttle 38 (Fig. 5) for selectively actuating the rings of teeth 29 in the gear cages. This shuttle may be controlled in any suitable manner by a manual gear selector or an automatic gear select-

-5:-

ing mechanism which slides the shuttle along the passageway so as to select the required gear ratio. The shuttle may be arranged to have a spring return. As shown in Fig. 5, it comprises a cylindrical body 39 having conically tapered end portions 40 for initially engaging the curved hook portions 32 at opposite ends of the teeth 29 as the shuttle is urged into each cage through the central opening 36 defined by the inner edges of the teeth. The tapered end portions 40 cam the teeth outwardly as the shuttle is moved into the opening 36 thereby radially to expand the ring of teeth into mesh with the cooperating toothed section 12-16 of the shell. When the teeth are fully expanded and in mesh with the cooperating toothed section of the shell, the shuttle is stationary and the inner edges 35 of the teeth rest on the cylindrical body part 39 of the shuttle. The shuttle is of such a length and design that, when the selector mechanism is actuated to move the shuttle from one gear cage and into engagement with an adjacent cage, the shuttle does not permit the teeth of said one cage fully to disengage from the shell until it has urged the teeth of the adjacent cage into mesh with its cooperating toothed section on the shell. This facilitates the changeover from one gear ratio to the next since at the instant of changeover the toothed sections are rotating at the same speed. As the adjacent cage teeth are expanded into mesh by the shuttle, the previously engaged cage teeth disengage and are retracted inwardly to their rest position under the action of the annular springs 32.

The change gear unit 19 is driven by the input shaft 2. The shaft 2 projects into the interior of the shell 6 through the end plate 8 and is journalled in this end plate by a rolling bearing 41. It is coupled to the unit 19 by a pinion 42 fixed to its inner end and meshing with a bevel gear 43 fixed to the shaft 20 of the unit 19.

-6-

In operation, the shuttle 38 is normally urged into the position in which it engages the gear cage providing the highest gear ratio coupling, viz, the gear cage 28 adjacent the largest diameter end of the shell 6. Upon engaging the clutch 3, therefore, the engine is immediately coupled to drive the vehicle through the correct gear ratio for initiating motion of the vehicle, commonly referred to as low gear. The drive is transmitted from the clutch 3 to the output shaft 4 of the gearbox via the input shaft 2, the meshing gears 42,43, the cage 28 meshing with its cooperating toothed section 16 on the shell, the meshing bevel gears 18,17 and the gear train 7. As the vehicle accelerates, the selector mechanism can shift the shuttle 38 along the passageway 37 in the change gear unit 5 so as successively to engage the gear cages 27-24 and change the gear ratio of the coupling provided by the mechanism 5 in accordance with the desired speed of the vehicle. Conversely, when the vehicle slows down, the selector mechanism can return the shuttle successively through the cages 24-28 to the lowest gear drive, which is provided by the cage 28 being in mesh with its cooperating toothed section 16 on the shell.

Whilst a particular embodiment has been described, it will be understood that modifications can be made without departing from the scope of the invention. For example, it is an easy matter to change the number of toothed sections 12-16 on the shell 6 and gear cages 24-28 of the change gear unit 19 so as to alter the number of gear ratios which may be selected for driving the vehicle.

In a modified version of the change-speed gear mechanism, the frusto-conical shell 6 is replaced by a disc having concentric rings of gear teeth disposed on one face thereof. The gear teeth extend radially of the disc and the number of teeth in each ring increases successively from the inner to the outer ring. The change gear unit, which may be constructed similarly to the unit 19, is mounted with its axis disposed radially and parallel to the toothed face of the disc with the gear cages arranged to cooperate respectively with the rings of teeth. The input or output shaft may be coupled to the change gear unit adjacent the centre of the disc and the output or input gear ring may be fixed to the disc adjacent its periphery. Such a mechanism operates in a similar manner to that described above to effect selective change in the gear ratio of the transmission.

-8-

## CLAIMS

1. A change-speed gear mechanism characterized by a frusto-conical or disc-like rotary member (6) having gear teeth (12-16) disposed substantially parallel to the generatrix of the member, an input or output shaft (2) rotatable relatively to the rotary member, an output or input gear (18) fixed to the rotary member coaxially therewith so as to be rotatable with the member, a gear change unit (19) mounted for rotation about an axis substantially parallel to the generatrix of the rotary member and comprising a series of gear cages (24-28) arranged coaxially with respect to the axis of the change gear unit, said gear cages respectively including rings of gear teeth (29) which rings are selectively expandable radially of the cages into mesh with the gear teeth (12-16) on the rotary member so as to transmit rotation between the rotary member (6) and a selected gear cage (24-28), and said rotary member and gear cages being adapted to provide different gear ratio connections when the gear cages are respectively in mesh with the rotary member, and gear means (42,43) coupling the change gear unit to the input or output shaft (2).

2. A change-speed gear mechanism as claimed in claim 1, wherein the rotary member is a hollow, frusto-conical rotary member (6) having the gear teeth (12-16) disposed about its internal conical surface substantially parallel to the generatrix thereof, and the gear change unit (19) is mounted internally of the rotary member.

3. A change-speed gear mechanism as claimed in claim 1 or 2, wherein the gear teeth on the rotary member (6) comprise a series of gear ring sections (12-16) disposed coaxially with respect to the axis of rotation of the rotary member and respectively having increasing numbers of gear teeth from the innermost section (12) to the outermost section (16), said ring sections cooperating respectively with the gear cages (24-28) of the changed gear unit, each of which cages has the same number of gear teeth (29).

4. A change-speed gear mechanism as claimed in claim 1 or 2, wherein the gear teeth on the rotary member (6) comprise a single set of gear teeth which extend substantially parallel to the generatrix of the rotary member and taper along their lengths from their inner to their outer ends, and wherein the gear cages (24-28) cooperating with the tapered gear teeth are respectively provided with different numbers of gear teeth (29).

5. A change-speed gear mechanism as claimed in any one of the preceding claims, wherein the ring of gear teeth (29) mounted in each cage (24-28) is expandable by a shuttle member (38) which is slidable axially within the change gear unit (19) and is controllable so as selectively to expand the teeth of the cages.

6. A change-speed gear mechanism as claimed in claim 5, wherein the shuttle (38) is of such a length that it initially expands the teeth (29) of one cage into mesh with the teeth of the rotary member (6) before permitting the teeth (29) of the adjacent, previously-engaged cage to disengage from the rotary member.

7. A change-speed gear mechanism as claimed in claim 5 or 6, wherein the shuttle member (38) is controllable by a manually operable gear selector or an automatic gear selecting mechanism.

8. A change-speed gear mechanism as claimed in any one of the preceding claims, wherein the input or output shaft (2) is coupled to the inner end of the change gear unit (19) and the output gear (18) is disposed at or adjacent the outer periphery or larger diameter end of the rotary member.

9. A change-speed gear unit as claimed in any one of the preceding claims, wherein the input shaft (2) is coupled to an engine via a clutch mechanism (3) and the output gear (18) is coupled to a propeller shaft via a gear train comprising a reversing mechanism.

Fig.1

Fig.2

Fig.3

Fig.4

Fig.5

European Patent Office

**EUROPEAN SEARCH REPORT**

Application number

EP 80 30 0739

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| | CH - A - 168 811 (FORNEROD) <br> * Whole document * | 1,3,5, 6,7 | F 16 H 3/4ᴸ 3/36 |
| | -- | | |
| | US - A - 2 807 964 (OVSHINSKY) <br> * Whole document * | 1-4,8, 9 | |
| | -- | | |
| | GB - A - 7 447 AD 1910 (CZERNIEW- SKI) <br> * Whole document * | 4 | |
| | -- | | TECHNICAL FIELDS SEARCHED (Int.Cl. ³) |
| | FR - A - 737 417 (CAILLE) <br> * Figures 1,7; page 3, lines 38- 55 * | 5 | F 16 H |
| | -- | | |
| A | US - A - 3 702 571 (SAINZ) <br> * Whole document * | 1. | |
| | -- | | |
| A | US - A - 1 471 162 (JACOBACCI) <br> * Whole document * | 1 | |
| | -- | | CATEGORY OF CITED DOCUMENTS |
| A | US - A - 3 463 028 (POLIDOR) <br> * Whole document * | 1 | X. particularly relevant <br> A. technological background <br> O: non-written disclosure <br> P: intermediate document <br> T theory or principle underlying the invention |
| | -- | | |
| A | GB - A - 919 736 (BIANCHI) <br> * Whole document * | 1 | E: conflicting application <br> D: document cited in the application <br> L: citation for other reasons |
| | -- <br> ./. | | |
| | | | &· member of the same patent . family, corresponding document |
| | The present search report has been drawn up for all claims | | |

| Place of search | Date of completion of the search | Examiner |
|---|---|---|
| The Hague | 22-04-1980 | BILLAUD |

EPO Form 1503.1   06.78

## EUROPEAN SEARCH REPORT

Application number

EP 80 30 0799

European Patent Office

### DOCUMENTS CONSIDERED TO BE RELEVANT

| Category | Citation of document with indication, where appropriate, of relevant passages | Relevant to claim |
|---|---|---|
| A | <u>CH - A - 349 852</u> (HUNZIKER) <br> * Whole document * <br><br> -- | 1 |
| A | <u>DE - C - 411 142</u> (BAUME) <br> * Whole document * <br><br> ---- | 1 |

CLASSIFICATION OF THE APPLICATION (Int. Cl. 3)

TECHNICAL FIELDS SEARCHED (Int. Cl. 3)

EPO Form 1503.2  06.78